# EUROPÄISCHE PATENTANMELDUNG

(11) **EP 1 300 930 A2**
(43) Veröffentlichungstag der Anmeldung: **09.04.2003**
(21) Anmeldenummer: 02019717.4
(22) Anmeldetag: 03.09.2002
(51) Int. Cl.: H02K 13/00

(54) **Rotor für eine elektrische Maschine und Verfahren zur Herstellung eines Rotors**

(30) Priorität: 06.10.2001 DE 10149428
(71) Anmelder: ROBERT BOSCH GMBH, 70442 Stuttgart (DE)
(72) Erfinder: Wolkowicz, Joerg, 31079 Sibbesse (DE); Schneider, Rainer, 31171 Nordstemmen (DE)

(57) **Zusammenfassung**

Die Erfindung betrifft einen Rotor für eine elektrische Maschine, mit einem im Wesentlichen zylindrischen Grundkörper, der zur Aufnahme von Stromwenderwicklungen parallel verlaufende Nuten aufweist, in denen Leiterschleifen angeordnet sind, die über einen Kommutator kontaktierbar sind, wobei deren miteinander verschaltete Enden einen offenen Wickelkopf und deren Verbindungsstellen einen geschlossenen Wickelkopf eines Wicklungspaketes bilden, sowie ein Verfahren zur Herstellung des erfindungsgemäßen Rotors.

Es ist vorgesehen, dass der Kommutator (5a) auf der Seite des geschlossenen Wickelkopfes (4) angeordnet ist.

## Beschreibung

Die Erfindung betrifft einen Rotor für eine elektrische Maschine, insbesondere einen DW-Starteranker für Anlasser von Verbrennungsmotoren, mit den im Oberbegriff des Anspruchs 1 genannten Merkmalen, sowie ein Verfahren zur Herstellung eines Rotors mit den im Oberbegriff des Anspruchs 8 genannten Merkmalen.

### Stand der Technik

Elektrische Maschinen, die Rotoren der gattungsgemäßen Art umfassen, sind bekannt. Diese elektrischen Maschinen können beispielsweise Elektromotoren oder Generatoren sein. Insbesondere fallen hierunter auch als Universalmotor bezeichnete elektrische Maschinen. Aufbau und Funktion derartiger elektrischer Maschinen sind allgemein bekannt. Zur Funktion ist erforderlich, dass in einem Rotor, auch als Läufer oder Anker bezeichnet, über einen Kommutator elektrisch kontaktierbare Stromwenderwicklungen angeordnet sind. Diese Stromwenderwicklungen bestehen aus Leiterschleifen, die in Nuten des Rotors angeordnet sind. Die Leiterschleifen sind im Bereich des Kommutators miteinander elektrisch verbunden, so dass diese über eine Kontaktierungseinrichtung, insbesondere eine Bürstenanordnung, elektrisch kontaktierbar sind. Zur Ausbildung der Leiterschleifen ist bekannt, diese aus einzelnen Leitungsstücken zusammenzusetzen. Aufgrund der speziellen Ausbildung der Leiterschleifen, insbesondere durch einen Übergang vom eigentlichen Rotor in den Kommutatorbereich und die elektrische Verbindung radial übereinander liegender Leiterstücke, kommt es zur Ausbildung so genannter Wickelköpfe, die stirnseitig an dem Grundkörper des Rotors angeordnet sind. Diese Wickelköpfe übernehmen die elektrische Verbindung der einzelnen, im Rotor angeordneten Leiterstücke.

Bei DW-Starterankern ist die Fertigung der Wicklung aus einzelnen Elementen mit einem Nutschritt von sechs Nuten bekannt. Der Wickelschritt auf der Kommutatorseite wird durch Verschränken der Leiter der Ober- und Unterlage zueinander von jeweils zwei Nuten erzeugt. Auf diese Weise entsteht ein Schaltschritt von zehn Nuten am Kommutator. Für die Durchführung dieses Verschränkprozesses ist aus fertigungstechnischen Gründen eine bestimmte Drahtlänge für die Leiter vorzuhalten, um die Drahtenden greifen und später diese Enden mit dem Kommutator verschweißen zu können. Hier werden die Drähte untereinander und mit dem Kommutator an einer Stelle verbunden. Für die Realisierung dieser Schaltschritte wird für die stirnseitig an dem Grundkörper des Rotors gebildeten Wickelköpfe eine bestimmte Mindestraumgröße benötigt. Die Größe dieses Raumes wird von Drahtdurchmesser, Wicklungspaketdurchmesser, Schaltschritt und Nutzahl bestimmt. Die gesamte Baulänge eines solchen DW-Starterankers ergibt sich somit aus der Wicklungspaketlänge, den Wickelkopflängen, der Länge des Kommutators und der Länge der Lagerstellen an der Ankerwelle. Für die Funktion des Starters sind die Parameter der Wicklungspaketlänge, der Länge des Kommutators und der Länge der Lagerstellen ausschlaggebend, so dass insbesondere die Wickelkopflängen die Baulänge des Starterankers ungünstig beeinflussen.

### Vorteile der Erfindung

Der erfindungsgemäße Rotor mit den im Anspruch 1 genannten Merkmalen bietet den Vorteil der Möglichkeit der Verkürzung des Rotors und damit verbunden eine kleinere und leichtere Ausführung der elektrischen Maschine insgesamt, ohne dass eine Änderung der Funktion erfolgt. Dadurch, dass der Kommutator auf der Seite des geschlossenen Wickelkopfes des Wicklungspaketes angeordnet ist und insbesondere die Verbindungsstellen zwischen Wicklungspaket und Kommutator in den geschlossenen Wickelkopf hinein versenkt angeordnet sind, wird die Wickelkopflänge des kommutatorseitigen geschlossenen Wickelkopfes erheblich reduziert.

Ferner ist bevorzugt vorgesehen, dass der Kommutator bis an eine Ringschulter des Grundkörpers des Rotors heranreicht und hierdurch die Verbindungsstellen am Kommutatorbund im Inneren des geschlossenen Wickelkopfes angeordnet sind.

Die auf der Seite des offenen Wickelkopfes miteinander verschalteten Leiterenden werden vorzugsweise nach innen in den Wickelkopf hinein rolliert angeordnet, so dass sich die Wickelkopflänge des offenen Wickelkopfes ebenfalls reduziert.

In einer weiteren bevorzugten Ausgestaltung der Erfindung ist vorgesehen, dass die Verbindungsstellen zum Kommutator von jeweils nur einem Leiter des Wicklungspaketes gebildet sind. Hierdurch kann sowohl der Materialeinsatz als auch der schweißtechnische Aufwand reduziert werden.

Die bevorzugte Ausbildung der Verbindungsstellen zwischen Wicklung und Kommutator als Strahlfalle, insbesondere für Laser- oder Elektronenstrahlschweißen zum Verbinden der Wicklung mit dem Kommutator in Verbindung mit einem ausreichenden Verbindungsquerschnitt, gewährleistet eine sichere Schweißung und damit einen sicheren Kontaktpunkt.

Das erfindungsgemäße Verfahren zur Herstellung eines Rotors bietet den Vorteil, dass der Montageaufwand verringert werden kann.

Von Vorteil ist insbesondere, dass die Verfahren zur Verbindung des Wicklungspaketes mit dem Kommutator am geschlossenen Wickelkopf und zur Verschaltung der Wickelelemente (Leiterschleifen) am offenen Wickelkopf getrennt durchgeführt werden können.

Während aufgrund der schwierigeren Zugänglichkeit auf der Kommutatorseite zur Verbindung des Wicklungspaketes mit dem Kommutator vorzugsweise berührungslose Strahlschweißverfahren (Laser- oder Elektronenstrahlschweißen) angewendet werden, ist es vorteilhaft, auf der Seite des offenen Wickelkopfes die Leiterenden mittels Ultraschall- oder Widerstandsschweißens entsprechend zu verbinden und damit zu verschalten. Es kann somit ein gleichzeitiges Verbinden mehrerer, vorzugsweise aller Leiterzüge gleichzeitig erfolgen. Dieser Verfahrensweise ermöglicht die Senkung des Zeitaufwandes und somit des gesamten Herstellungsaufwandes.

Insbesondere durch die Anwendung des durch hochfrequente oszillierende Bewegung und Druck charakterisierten Ultraschallschweißverfahrens für das Verbinden und damit Verschalten der Leiterschleifen an der offenen Seite des Wickelkopfes fällt zusätzlich zur erzielten Zeiteinsparung der Aufwand für das bisher übliche Verzinnen der Leiterenden weg.

Weitere bevorzugte Ausgestaltungen der Erfindung ergeben sich aus den übrigen, in den Unteransprüchen genannten Merkmalen.

### Zeichnungen

Die Erfindung wird nachfolgend in einem Ausführungsbeispiel anhand der zugehörigen Zeichnung, die schematisch eine Schnittdarstellung durch einen Rotor zeigt, näher erläutert.

### Beschreibung des Ausführungsbeispiels

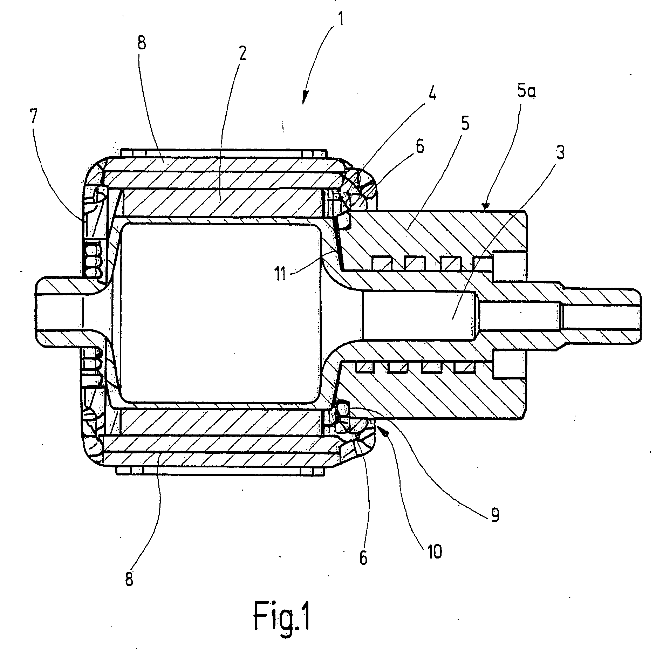

In der Zeichnung ist ein Rotor 1 einer im Einzelnen nicht dargestellten elektrischen Maschine gezeigt.

Der Rotor 1 umfasst einen zylindrischen Grundkörper 2, der drehfest auf einer Rotorwelle 3 angeordnet ist. Der Grundkörper 2 geht in einen durchmesserkleineren Kommutatorbereich 5 über. In den Grundkörper 2 und in den Kommutatorbereich 5 sind in bekannter Weise Leiterschleifen 8 integriert. Die Anzahl der Leiterschleifen 8 wird in Abhängigkeit der von der elektrischen Maschine geforderten elektrischen und mechanischen Parameter festgelegt. Die Funktion derartiger Leiterschleifen 8 ist dem Fachmann geläufig, so dass im Rahmen der vorliegenden Beschreibung hierauf nicht näher eingegangen wird.

Hinsichtlich der Anordnung des Wicklungspaketes der Leiterschleifen 8 ist vorgesehen, dass sich ein Kommutator 5a auf der Seite eines geschlossenen Wickelkopfes 4 befindet. Der Kommutator 5a selbst ist so angeordnet, dass Verbindungsstellen 6 zu einem Kommutatorbund 9 im Inneren des geschlossenen Wickelkopfes 4 liegen und der Kommutator 5a bis an das Wicklungspaket geschoben wird.

Die Verbindungsstellen 6 der Leiterschleife(n) 8 zum Kommutator 5a sind so ausgeführt, dass sich hier jeweils nur ein Leiter in Kontakt mit dem Kommutator 5a befindet. Diese Verbindungen zwischen Leiter und Kommutator 5a werden mittels Schweißen hergestellt, wie noch erläutert wird.

Die Herstellung des geschlossenen Wickelkopfes 4 erfolgt nach dem so genannten Haarnadelverfahren. Hierbei werden aus zugeschnittenen Kupferdrahtlängen einfache U-Formen gebogen. Für die spätere Verbindung der Leiterschleifen 8 untereinander sind die Leiterenden jeweils abisoliert. Diese haarnadelförmigen Leiterstücke werden in einem Schränkwerkzeug um den vorgegebenen Nutschritt verschränkt. Da sich die Leiter beim Verformen untereinander abstützen und sich auf engstem Raum staffeln, entsteht so eine sehr kompakte Wickelkopfform. Die komplette Wicklung wird dann in das isolierte Paket des Grundkörpers 2 eingefügt.

Mittels eines an sich bekannten Schränkverfahrens wird nachfolgend der Schaltschritt hergestellt. Hierbei werden die Leiterenden der Ober- und Unterlage getrennt voneinander, jeweils zwei Nuten umfassend, entgegengesetzt verschränkt. Die Kontaktstelle zum Kommutator 5a ist so abisoliert, dass eine möglichst große Kontaktfläche entsteht. Der dabei entstehende Innendurchmesser wird so gewählt, dass zum Kommutator 5a eine Presspassung entsteht.

Am gegenüberliegenden offenen Wickelkopf 7 werden die geschränkten Leiterschleifen 8 durch Schweißen miteinander verbunden und damit verschaltet.

Die dann freistehenden verschalteten Leiterenden werden nach innen in den Wickelkopf 7 hineinrolliert. Somit wird hier ebenfalls eine kompakte Wickelkopfform erreicht, die in ihren Ausmaßen der kommutatorseitigen Wickelkopfform entspricht. Mit dem nach innen kleiner werdenden Umfang verringert sich auch der Abstand der Leiter zueinander. Um auf dieser Seite Windungsschlüssen vorzubeugen, werden die verschweißten Leiterenden vor dem Rollieren in bekannter Weise gegeneinander entsprechend isoliert.

Für die Ausführung der Schweißverbindung zwischen den Leiterschleifen 8 des Wicklungspaketes und dem Kommutator 5a wird aufgrund der relativ schwierigen Zugänglichkeit beispielsweise das Laserschweißverfahren oder auch das Elektronenstrahlschweißverfahren angewendet, um die Verbindung berührungslos herzustellen. Durch die Ausbildung des geschlossenen Wickelkopfes 4 entsteht zwischen den mit dem Kommutator 5a zu verschweißenden Leiterschleifen 8 und dem Kommutator 5a eine Strahlfalle 10. Hierdurch wird ein punktgenaues Verbinden der Leiterschleifen 8 mit dem Kommutator 5a möglich. Es ist quasi eine selbstjustierte Führung der Schweißstrahlen möglich.

Die Punkte der Leiterschleifen 8, die den Kommutator 5a tangential berühren, liegen axial nicht in einer Flucht mit den zugeordneten Paketnuten. Der Kommutator 5a muss also um diesen Winkel verdreht auf den Grundkörper 2 aufgesetzt werden. In der elektrischen Maschine müssen aus diesem Grund die Anordnungswinkel der Bürsten ebenfalls korrigiert werden.

Das Verschweißen der Leiterenden an der Seite des offenen Wickelkopfes 7 erfolgt vorzugsweise durch Ultraschallschweißen. Hierbei werden mehrere Leiter, insbesondere alle Leiter gleichzeitig, gefügt. Bei der Durchführung des Ultraschallschweißens liegt der Amboss an den Leitern der Oberlage und die Sonotrode oszilliert an den Leitern der Unterlage. Durch Anwendung des Ultraschallschweißens kann auf das bisher übliche Verzinnen der Leiterenden verzichtet werden.

Als eine weitere Möglichkeit für das Verbinden der Leiterenden an der Seite des offenen Wickelkopfes 7 können auch die zuvor genannten Strahlschweißverfahren (Laser- beziehungsweise Elektronenstrahlschweißverfahren) angewendet werden. Bei Anwendung dieser Verfahren ist es von Vorteil, wenn die Leiter mit entsprechenden mechanischen Positionierungshilfen gehalten werden oder bei Bedarf mit computergesteuerter Bildverarbeitungstechnik in ihrer Lage bestimmt werden.

## Patentansprüche

1. Rotor für eine elektrische Maschine, mit einem im Wesentlichen zylindrischen Grundkörper, der zur Aufnahme von Stromwenderwicklungen parallel verlaufende Nuten aufweist, in denen Leiterschleifen angeordnet sind, die über einen Kommutator kontaktierbar sind, wobei deren miteinander verschaltete Enden einen offenen Wickelkopf und deren Verbindungsstellen einen geschlossenen Wickelkopf eines Wicklungspaketes bilden, **dadurch gekennzeichnet, dass** der Kommutator (5a) auf der Seite des geschlossenen Wickelkopfes (4) angeordnet ist.

2. Rotor nach Anspruch 1, **dadurch gekennzeichnet, dass** die Verbindungsstellen (6) zwischen Wicklungspaket und Kommutator (5a) in den geschlossenen Wickelkopf (4) hinein versenkt angeordnet sind.

3. Rotor nach Anspruch 1 oder 2, **dadurch gekennzeichnet, dass** der Kommutator (5a) bis an eine Ringschulter (11) des Grundkörpers (2) heranreichend angeordnet ist und die Verbindungsstellen (6) an einem Kommutatorbund (9) im Inneren des geschlossenen Wickelkopfes (4) angeordnet sind.

4. Rotor nach einem der Ansprüche 1 bis 3, **dadurch gekennzeichnet, dass** die Verbindungsstellen (6) zwischen Wicklungspaket und Kommutator (5a) von jeweils nur einem Leiter (8) gebildet sind.

5. Rotor nach einem der Ansprüche 1 bis 4, **dadurch gekennzeichnet, dass** die Verbindungsstellen (6) zwischen Wicklungspaket und Kommutator (5a) als Strahlfallen (10) für das Verbinden der Wicklung mit dem Kommutator (5a), insbesondere durch Laser- und Elektronenstrahlschweißen, ausgebildet sind.

6. Rotor nach einem der vorhergehenden Ansprüche, **dadurch gekennzeichnet, dass** die auf der Seite des offenen Wickelkopfes (7) miteinander verschalteten Leiterenden der Leiterschleifen (8) nach innen in den Wickelkopf (7) hinein rolliert angeordnet sind.

7. Rotor nach Anspruch 6, **dadurch gekennzeichnet, dass** die Leiterenden der Leiterschleifen (8) auf der Seite des offenen Wickelkopfes (7) durch Verschweißen miteinander verschaltet sind.

8. Verfahren zur Herstellung eines Rotors für eine elektrische Maschine, insbesondere nach einem der Ansprüche 1 bis 7, **dadurch gekennzeichnet, dass** für die Erzielung eines geschlossenen Wickelkopfes (7) eines Wicklungspaketes entsprechend abgelängte Leiterstücke U-förmig gebogen werden, welche in einem Schränkwerkzeug mit dem vorgesehenen Nutschritt verschränkt werden, und dieses so hergestellte Wicklungspaket in eine Isolierung des Rotors (1) eingefügt wird, anschließend als Schaltschritt mittels eines Schränkverfahrens die Leiterenden der Ober- und Unterlage getrennt voneinander jeweils um die entsprechende Anzahl von Nuten entgegengesetzt verschränkt werden und die Verbindung zum Kommutator (5a) insbesondere mittels Schweißen hergestellt wird.

9. Verfahren nach Anspruch 8, **dadurch gekennzeichnet, dass** für den offenen Wickelkopf (7) die geschränkten Leiter mittels Schweißverfahren verbunden und die freistehenden Leiterenden in den offenen Wickelkopf (7) gebogen werden.

10. Verfahren nach einem der vorhergehenden Ansprüche, **dadurch gekennzeichnet, dass** nach einer Abisolierung des Bereiches der Verbindungsstelle (6) eine Verbindung von Leiter und Kommutator (5a) durch Punktschweißen mittels Laserschweißung hergestellt wird.

11. Verfahren nach einem der vorhergehenden Ansprüche, **dadurch gekennzeichnet, dass** nach einer Abisolierung des Bereiches der Verbindungsstelle (6) eine Verbindung von Leiter und Kommutator (5a) durch Punktschweißen mittels Elektronenstrahlschweißung hergestellt wird.

12. Verfahren nach einem der vorhergehenden Ansprüche, **dadurch gekennzeichnet, dass** die geschränkten Leiter des offenen Wickelkopfes (7) mittels Ultraschallschweißen verbunden werden.

13. Verfahren nach Anspruch 12, **dadurch gekennzeichnet, dass** das Verschweißen aller Leiter gleichzeitig erfolgt.

14. Verfahren nach Anspruch 12 oder 13, **dadurch gekennzeichnet, dass** der Amboss an den Leitern der Oberlagen anliegt und die Sonotrode innen an den Leitern der Unterlagen oszilliert.

15. Verfahren nach Anspruch 9, **dadurch gekennzeichnet, dass** die geschränkten Leiter des offenen Wickelkopfes (7) mittels Laserschweißen verbunden werden.

16. Verfahren nach Anspruch 9, **dadurch gekennzeichnet, dass** die geschränkten Leiter des offenen Wickelkopfes (7) mittels Elektronenstrahlschweißen verbunden werden.

17. Verfahren nach einem der vorhergehenden Ansprüche, **dadurch gekennzeichnet, dass** die Leiter mittels mechanischer Positionshilfen bei der Durchführung des Schweißens gehalten werden.

18. Verfahren nach einem der vorhergehenden Ansprüche, **dadurch gekennzeichnet, dass** die Leiter mittels computergesteuerter Bildverarbeitung in ihrer Lage bestimmt werden.
